# EUROPÄISCHE PATENTSCHRIFT

(11) **EP 0 843 625 B1**
(45) Veröffentlichungstag und Bekanntmachung des Hinweises auf die Patenterteilung: **20.10.1999**
(21) Anmeldenummer: 96933334.3
(22) Anmeldetag: 05.08.1996
(51) Int. Cl.: B60L 5/28

(54) **STROMABNEHMER**
CURRENT COLLECTOR
PANTOGRAPHE DE CAPTAGE DE COURANT

(30) Priorität: 08.08.1995 DE 19529070
(43) Veröffentlichungstag der Anmeldung: 27.05.1998
(73) Patentinhaber: ABB Daimler-Benz Transportation (Technology) GmbH, 13627 Berlin (DE)
(72) Erfinder: GRAMATKE, Klaus-Dieter, D-40227 Düsseldorf (DE); LUTZ, Ferdinand, D-53639 Königswinter (DE); KESKE, Klaus, D-01129 Dresden (DE); SCHAUB, Berthold, D-69214 Eppelheim (DE); SCHMADERER, Franz, D-68526 Ladenburg (DE); BAIER, Gunar, D-68129 Mannheim (DE); MATTHIAS, Björn, D-76669 Bad Schönborn (DE)
(74) Vertreter: Luderschmidt, Schüler & Partner GbR
(86) Internationale Anmeldenummer: EP9603447
(87) Internationale Veröffentlichungsnummer: WO9706026

(56) Entgegenhaltungen:
- DE-A- 1 438 818
- GB-A- 2 088 303

## Beschreibung

Die Erfindung bezieht sich auf einen Stromabnehmer gemäß dem Oberbegriff des Patentanspruches 1.

Stromabnehmer dieser Art haben die Aufgabe, elektrische Energie von einer Oberleitung zu einem elektrisch angetriebenen Fahrzeug zu übertragen. Die bis jetzt bekannten Stromabnehmer weisen wenigsten einen stabförmigen Schleifkontakt auf, dessen Längsachse senkrecht zur, Längsrichtung der Oberleitung ausgerichtet ist. Mit Hilfe einer Haltevorrichtung, die als Wippe oder Schere ausgebildet ist, wird der Kontakt zwischen der Oberleitung und dem Schleifkontakt aufrechterhalten. Von Nachteil hierbei ist, daß diese rein passiv arbeitenden Stromabnehmer die bei hohen Fahrgeschwindigkeiten auftretenden Schwingungen der Oberleitung nur durch eine Erhöhung der Rückstellkraft und damit nur durch eine Erhöhung der Anpreßkraft des Schleifkontakts an die Oberleitung ausgleichen können. Dieses kann nur durch ein weiteres Aufspreizen der Haltevorrichtung erzielt werden. Damit läßt sich die Gefahr eines Kontaktabrisses zwischen dem Schleifkontakt und der Oberleitung verhindern und der Aufbau von Lichtbögen verringern. Hierfür muß jedoch ein erhöhter Materialverschleiß am Schleifkontakt durch die stärkere mechanische Belastung in Kauf genommen werden.

In der GB-A-2 088 303 ist ein Stromabnehmer für elektrisch über eine Oberleitung betriebene Fahrzeuge in Form einer teleskopartigen Holmanordnung beschreiben. Die mit der Oberleitung in Kontakt stehende Wippe, ist an dem nach oben weisendem Ende eines Wippenträgers befestigt. Sie wird mittels einer Feder, einer Hydraulik oder Pneumatik gegen den Fahrdraht der Oberleitung gedrückt. Der Wippenträger ist in einem Stromabnehmerrohr angeordnet, das teleskopartig in einem Verlängerungsrohr installiert ist. Er kann mittels einer Verstellvorrichtung in unterschiedlichen Höhen festgestellt werden. Ferner ist eine Vorrichtung vorgesehen, mit welcher die Position des Wippenträgers im Stromabnehmerrohr entsprechend der jeweiligen Höhe des Fahrdrahts ermittelt werden kann. Gelangt der Wippenträger auf Grund von Fahrdrahthöhenänderungen in die Nähe der oberen oder unteren Endstellung, erfolgt eine Höhenverstellung des Stromabnehmerrohrs, das in diesen Fällen automatisch nach oben bzw. nach unten verfahren wird.

Der Erfindung liegt die Aufgabe zugrunde, einen Stromabnehmer aufzuzeigen dessen Schleifkontakt bzw. Schleifkontakte mit der Oberleitung zerstörungsfrei in eine elektrisch leitende Verbindung gebracht werden können.

Diese Aufgabe wird durch die Merkmale des Patentanspruchs 1 gelöst.

Der erfindungsgemäße Stromabnehmer kann schädigene Einwirkungen, die durch Auslenkungen oder fehlerhafte Führungen der Oberleitung hervorgerufen werden, so weit ausgleichen, daß der Schleifkontakt bzw. die Schleifkontakte nicht beschädigt werden, sondern nur eine sehr geringe Abnutzung erfahren. Gleichzeitig wird sichergestellt, daß der Schleifkontakt bzw. die Schleifkontakte immer in einer sehr guten elektrisch leitenden Verbindung mit der Oberleitung verbleiben. Das Prinzip des erfindungsgemäßen Stromabnehmers beruht darauf, daß die typischerweise auftretenden höherfrequenten vertikalen Schwingungen > 5Hz der Oberleitung, die erfahrungsgemäß Amplituden von weniger als 2 cm aufweisen, durch ein Federsystem ausgeglichen werden. Die niederfrequenten vertikalen Schwingungen von < 5 Hz, bei denen Amplituden> 10 cm auftreten können, werden durch die geregelte Höhenverstellung einer Haltevorrichtung ausgeglichen.

Weitere erfindungswesentliche Merkmale sind in den abhängigen Ansprüchen gekennzeichnet.

Die Erfindung wird nachfolgend anhand einer schematischen Zeichnung näher erläutert.

Die einzige zur Beschreibung gehörige Figur zeigt einen Stromabnehmer 1. Er wird im wesentlichen durch eine Haltevorrichtung 2, einen Sensor 3, eine Auswerte- und Steuereinheit 4, einen Träger 5 für den Schleifkontakt 6 und ein Federsystem 7 gebildet. Die Haltevorrichtung 2 ist auf einer Trageplatte 30 befestigt. Die Trageplatte 30 ist über Isolatoren 41 auf dem Dach eines nicht näher dargestellten elektrisch angetriebenen Fahrzeugs 100 installiert. Die Haltevorrichtung 2 wird durch einen in Richtung des Fahrdrahtes 100 beweglichen Tragarm 21 gebildet. Zu diesem Zweck ist das erste Ende des Tragarms 21 über ein Gelenk 22 mit der Trageplatte 30 verbunden. An Stelle dieser Haltevorrichtung kann auch ein als Halbscherenstromabnehmer ausgebildeter Pantograph verwendet werden. Es handelt sich hierbei um eine bereits zum Stand der Technik gehörende sehr verbreitete Bauform, die deshalb hier nicht näher erläutert wird. Die Antriebsvorrichtung 24 ist ebenfalls über ein Gelenk 23 auf der Trageplatte 30 befestigt. Diese Antriebsvorrichtung 24 ist bei der hier dargestellten Ausführungsform als Hydraulikzylinder ausgebildet, dessen zweites Ende über ein Gelenk 25 mittig an dem Tragarm 21 angreift. Es besteht auch die Möglichkeit, die Antriebsvorrichtung 24 als pneumatischen oder elektromechanischen Antrieb auszuführen. Der Tragarm 21 kann auch aus zwei Teilen bestehen, die über ein Gelenk miteinander verbunden sind (hier nicht dargestellt). In diesem Fall wird die Antriebsvorrichtung 24 mit dem Teil des Tragarms 21 verbunden, das näher zu Oberleitung 102 angeordnet ist. Eine solche Ausbildung des Tragarms hat den Vorteil, daß die angreifenden Windkräfte einfacher kompensiert werden können. In beiden Fällen wird der Tragarm 21 aus faserverstärktem Kunststoff hergestellt. Hierdurch wird die benötigte hohe Steifigkeit der Konstruktion sichergestellt.

Am zweiten Ende des Tragarms 21 ist das Federsystem 7 installiert. Bei dem hier dargestellten Ausführungsbeispiel ist das Federsystem 7 als Federbein ausgebildet. Es können aber auch andere Federsysteme, z.B. pneumatische Federungen verwendet werden. Das Federsystem 7 weist eine gegen den Schleifkontakt 6 und den Trager 5 gerichtete Rückstellkraft auf, deren Größe auf die Gewichte des Schleifkontakts 6 und des Trägers 5 abgestimmt ist. Um diese Gewichte gering zu halten, ist der Schleifkontakt 6 aus Kohle und der Träger 5 aus einem Faserverbundwerkstoff gefertigt. Das Gewicht beider Bauelemente 5 und 6 ist bei dem hier dargestellten Ausführungsbeispiel kleiner als 8kg. An Stelle eines Schleifkontakts 6 können auch zwei Schleifkontakte (hier nicht dargestellt) verwendet werden. In diesem Fall ist die Größe der Rückstellkraft darauf abzustimmen oder das Gewicht der beiden Schleifkontakte ist so zu wählen, daß die Gewichte der Schleifkontakte und das Gewicht des Trägers 5 zusammen weniger als 8kg betragen. Die Rückstellkraft des hier gezeigten Federsystems wird um 40 bis 100 N, vorzugsweise 60 bis 80 N, höher gewählt als die Gewichtskraft auf Grund der Masse der Bauelemente 5 und 6.

Das Federbein 7 ist so auf dem Tragarm 21 befestigt, daß seine Längsachse immer senkrech! zur Oberleitung 102 verläuft. Dieses wird mit Mitteln erreicht, die bereits zum Stand der Technik gehören und deshalb hier nicht näher erläutert werden. An dem zweiten Ende des Federbeins 7 ist der Träger 5 befestigt, auf dessen Oberseite der Schleifkontakt 6 installiert ist. An der Unterseite des Trägers 5 ist eine Meßleiste 8 gehaltert. Unmittelbar vor der Meßleiste 8 ist der Abtastkopf 3K des Sensors 3 installiert. Die Meßleiste 8 und der Abtastkopf 3K sind zum Schutz vor Schmutz von einem Gehäuse 3G umgeben. Bei dem hier dargestellten Ausführungsbeispiel folgt die Abtastung der Meßleiste 8 mit einer optischen Faser. Mit dem Sensor 3 wird kontinuierlich der jeweilige Abstand zwischen einem festen Bezugspunkt M am Federbein 7 und dem Kontaktpunkt K zwischen dem Schleifkontakt 6 und der Oberleitung 102 gemessen. Es gesteht die Möglichkeit, die Meßleiste 8 als Keilblende auszubilden, die zwischen einer optischen Faser als Sender und einer optischen Faser als Empfänger angeordnet ist. Je nach Lage der Keilblende wird der optische Strahl unterschiedlich abgeschwächt und die empfangene optische Leistung entsprechend geändert. Die Abstandsmessung kann selbstverständlich auch induktiv oder kapazitiv mit einem entsprechend ausgebildeten Abtastkopf 3K und einer hierfür geeigneten Meßleiste 8 durchgeführt werden. Von dem Abtastkopf 3K ist eine Signalleitung 10 bis zu der Auswerte- und Steuereinheit 4 geführt. Diese kann auf dem Dach des elektrisch angetriebenen Fahrzeug 100, wie hier dargestellt, oder innerhalb des Fahrzeugs 100 installiert werden. Die Signalleitung 10 wird teilweise durch den Tragarm 21 geleitet. Im Falle der optischen Ausführung der Abstandsmessung ist die Signalleitung 10 eine optische Faser. Diese optischen Abstandsmessung hat den Vorteil, daß keine elektrischen oder elektronischen Komponenten auf dem Stromabnehmer angebracht werden müssen. Es werden daher auch keine Maßnahmen zum Schutz vor elektromagnetischen Feldern benötigt. Die Auswerte- und Steuereinheit 4 ist mit ihrem Signalausgang über eine Signalleitung 11 mit der Antriebsvorrichtung 24 verbunden.

Die Funktionsweise des erfindungsgemäßen Stromabnehmers 1 wird nachfolgend näher erläutert. Wie bereits eingangs erwähnt, ändert sich im Fahrbetrieb die vertikale Lage des Kontaktpunktes K zwischen der Oberleitung 102 und dem Schleifkontakt 6. Dieses ist zum einen bedingt durch die konstruktive Auslegung der Oberleitung 102, zum anderen wird die mit dem Schleifkontakt 6 in Verbindung stehende Oberleitung 102 durch Kräfte, die auf sie einwirken, in Schwingungen versetzt. Um eine ungestörte elektrisch leitende Verbindung zwischen dem Schleifkontakt 6 und der Oberleitung 102 für einen kontinuierlichen Stromtransport von der Oberleitung 102 zu dem elektrisch angetriebenen Fahrzeug 100 sicherzustellen, muß der Schleifkontakt 6 den vertikalen Auslenkungen der Oberleitung 102 folgen. Das ist dann der Fall, wenn der Stromabnehmer 1 mit mehr als 40 N gegen die Oberleitung gedrückt wird. Andererseits sollten Anpreßkräfte von mehr als ca. 150 N vermieden werden, um eine vorzeitige mechanische Abnutzung des Schleifkontakts 6 und der Oberleitung 102 zu vermeiden. Eine vertikale Auslenkung der Oberleitung führt dazu, daß sich der Abstand zwischen dem Kontaktpunkt K des federnd gelagerten Schleifkontakts 6 und dem festen Bezugspunkt M ebenfalls ändert. Um den Schleifkontakt 6 ständig in elektrisch leitender Verbindung mit der Oberleitung 102 halten zu können, ist der Stomabnehmer 1 zum einen mit dem Federsystem 7 und zum anderen mit der Haltevorrichtung 2 ausgerüstet, die eine regelbare Höheneinstellung aufweist. Die Abstandsänderung zwischen dem Bezugspunkt M und dem Kontaktpunkt K zwischen dem Schleifkontakt 6 und der Oberleitung 102 wird gemessen. Die Meßgenauigkeit des Sensors 3 ist größer als 0,1cm. Für die nachfolgende Beschreibung wird davon ausgegangen, daß der Bezugspunkt M im idealen Fall einen Abstand X von dem Kontaktpunkt K hat. Die Meßleiste 8 steht dann mit ihrem Meßpunkt N(X) unmittelbar vor dem Abtastkopf 3K. Das Federsystem 7 ist so ausgelegt, daß die Anpreßkraft des Schleifkontakts 6 an die Oberleitung 102 60 bis 80 N beträgt, solange sich der Abstand X in einem Intervall X1 bis X2 befindet, wobei das Intervall X1 bis X2 eine Größe von ca. 10 cm aufweist. Solange die vertikale Auslenkung der Oberleitung 102 nicht dazu führt, daß der Abstand X größer oder kleiner als die vorgegebenen Intervallgrenzen X1 und X2 wird, ist sichergestellt, daß die Anpreßkraft für einen Stromübertrag ausreicht und gleichzeitig nicht so groß wird, daß eine vorzeitige Abnutzung erfolgt. Unabhängig von dieser Nachführung des Schleifkontakt 6 entlang der vertikalen Auslenkungen der Oberleitung 102 mit Hilfe des Federsystems 7, werden kontinuierlich Meßsignale von dem Abtastkopf 3K zu der Auswerte- und Steuereinheit 4 übermittelt, da sich die Meßleiste 8 bei jeder Abstandsänderung zwischen dem Bezugspunkt M und dem Kontaktpunkt K an dem Abtastkopf 3K vorbei bewegt, und dieses von dem Abtastkopf 3K erfaßt wird. Stellt die Auswerte- und Steuereinheit 4 fest, daß die Höhenänderung des Schleifkontakts 6 die in ihr gespeicherten oberen oder unteren Grenzwerte N(X1) und N(X2) erreicht, wird von ihrem Ausgangssignal die Antriebsvorrichtung 24 aktiviert. Mit deren Hilfe wird der Tragarm 21 soweit angehoben oder abgesenkt, daß der Abstand X zwischen dem Bezugspunkt M und dem Kontaktpunkt K zur, Oberleitung 102 in dem Abstandsintervall X1 bis X2 verbleibt. Damit wird sichergestellt, daß der elektrisch leitende Kontakt zwischen dem Schleifkontakt 6 und der Oberleitung 102 auch dann bestehen bleibt, wenn die vertikale Auslenkung der Oberleitung größer als ± 10cm ist. Durch diese Höhenverstellung des Stomabnehmer 1 wird erreicht, daß bei einer Auslenkung der Oberleitung um mehr als 10cm nach oben der Schleifkontakt 6, falls erforderlich, auch um mehr als 10cm nachgeführt werden kann, so daß der elektrisch leitende Kontakt niemals abreißt. Bei einer vertikalen Auslenkung der Oberleitung nach unter kann der Schleifkontakt dem Druck der Oberleitung soweit ausweichen, daß ein Abrieb seiner Oberfläche vermieden wird, der Kontakt jedoch auch in diesem Fall bestehen bleibt.

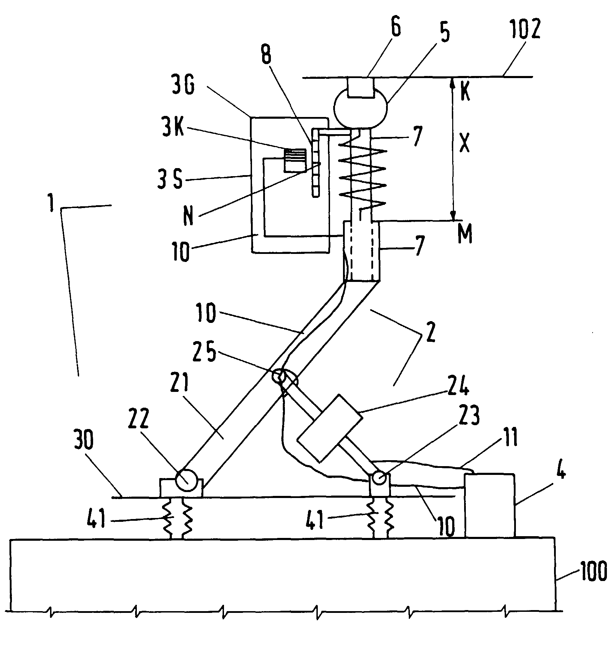

## Patentansprüche

1. Stromabnehmer mit einer einen Schleifkontakt (6) tragenden in der Höhe verstellbaren Haltevorrichtung (2) für die Übertragung elektrischer Energie von einer Oberleitung (102) zu einem elektrisch angetriebenen Fahrzeug (100) mit dem der Stromabnehmer (1) dauerhaft verbunden ist, wobei der Schleifkontakt (6) auf einem Träger (5) montiert und über ein als Federbein ausgebildetes Federsystem (7) durch die Rückstellkraft des Federsystems (7) in elektrisch leitender Verbindung mit der Oberleitung (102) gehalten ist, und das Federsystem (7) mit einem Tragarm (21) einer Haltevorrichtung (2) dauerhaft verbunden und an der Unterseite des Trägers (5) eine Abstandsüberwachungsvorrichtung befestigt ist, vor welche, ein Sensors (3) installiert ist, der den jeweiligen Abstand eines Bezugspunktes M am Federbein (7) von einem Kontaktpunkt (K) zwischen dem Schleifkontakt (6) und der Oberleitung (102) überwacht, und bei Abständen (X) außerhalb eines vorgegebenen Intervalls der Tragarm (21) der Haltevorrichtung (2) zur Aufrechterhaltung der elektrisch leitenden Verbindung zwischen dem Schleiftontakt (6) und der Oberleitung (102) über eine Antriebsvorrichtung (24) in der Höhe verstellbar ist, dadurch gekennzeichnet, daß das Intervall eine Länge von 10 cm aufweist und die Rückstellkraft 40N bis 100N beträgt und auf ein Gewicht <8kg von Schleifkontakt (6) und Träger (5) abgestimmt ist, daß der Sensor (3) aus zwei als Sender und Empfänger dienenden optischen Fasern besteht und die Abstandsüberwachungsvorrichtung eine Meßleiste (8) aufweist, die als Keilblende ausgebildet ist, welche zwischen dem Sender und dem Empfänger installiert ist, und daß der Sensor (3) über eine Signalleitung (10) an eine Auswerte- und Steuereinheit (4) angeschlossen ist, deren Signalausgang mit der Antriebsvorrichtung in Verbindung steht.

2. Stromabnehmer nach Anspruch 1, dadurch gekennzeichnet, daß die ersten Enden des ein- oder zweiteilig ausgebildeten Tragarms (21) und der Antriebsvorrichtung (24) über jeweils ein Gelenk (22 bzw. 23) auf einer Tragplatte (30) installiert sind, die über Isolatoren (41) dauerhaft auf dem Dach des elektrisch angetriebenen Fahrzeugs (100) befestigt ist.

3. Stromabnehmer nach einem der Ansprüche 1 oder 2, dadurch gekennzeichnet, daß die Antriebsvorrichtung (24) über ein Gelenk (25) am Tragarm (21) angreift, und daß das Federsystem (7) so am zweiten Ende des Tragarms (21) befestigt ist, daß seine Längsachse immer senkrecht zu der Oberleitung (102) ausgerichtet ist.

## Claims

1. A current collector with, supporting a sliding contact (6), a vertically adjustable supporting device (2) for transmitting electrical energy from an overhead line (102) to an electrically driven vehicle (100) to which the current collector (1) is permanently connected, the sliding contact (6) being mounted on a carrier (5) and being maintained in electrically conductive connection to the overhead line (102) by the restoring force of the spring system (7), the spring system (7) being permanently connected to a carrier arm (21) of a supporting device (2), a gap monitoring device being fixed on the under side of the carrier (5) and upstream of which there is a sensor (3) which monitors the gap between a reference point (M) on the sprung leg (7) from a contact point (K) between the sliding contact (6) and the overhead line (102) at any given moment and, at gaps (X) which fall outside a predetermined interval, the carrier arm (21) of the supporting device (2) can be adjusted in height by a drive device (24) in order to maintain the electrically conductive connection between the sliding contact (6) and the overhead line (102), characterised in that the interval has a length of 10 cm and the restoring force amounts to 40N to 100N and is attuned to a weight of less than 8 kg of sliding contact (6) and carrier (5) and in that the sensor (3) consists of two fibre optics which serve as transmitter and receiver, the gap monitoring device comprising a measuring strip (8) constructed as a wedge-shaped diaphragm which is installed between the transmitter and the receiver and in that the sensor (3) is connected by a signal line (10) to an evaluating and control unit (4), the signal output of which is connected to the drive device.

2. A current collector according to claim 1, characterised in that the first ends of the carrier arm (21) which is constructed in one or two parts, and the drive device (24) are installed by respective joints (22 and/or 23), on a carrier plate (30) which is fixed permanently on the roof of the electrically driven vehicle (100) via insulators (41).

3. A current collector according to one of claims 1 or 2, characterised in that the drive device (24) engages the carrier arm (21) via an articulation (25) and in that the spring system (7) is so fixed on a second end of the carrier arm (21) that its longitudinal axis is always orientated at right-angles to the overhead line (102).

## Revendications

1. Dispositif de captage du courant comprenant un dispositif porteur (2) réglable en hauteur et portant un contact glissant (6), destiné à transférer l'énergie électrique du fil de la caténaire (102) vers un véhicule (100) actionné par l'électricité avec lequel le dispositif de captage du courant (1) est relié en permanence, le contact glissant (6) étant monté sur un support (5) et étant maintenu, par l'intermédiaire d'un système de ressort (7) conçu en forme de jambe de force à ressort, en liaison électroconductrice avec le fil de la caténaire (102) sous l'effet de la force de rappel du système de ressort (7), et le système de ressort (7) est relié en permanence à un bras de support (21) d'un dispositif porteur (2) et un dispositif de contrôle de la distance est fixé contre la face inférieure du support (5), devant lequel dispositif est installé un capteur (3) qui contrôle chaque distance entre un point de référence (M) sur la jambe de force à ressort (7) et un point de contact (K) situé entre le contact glissant (6) et le fil de la caténaire (102), et, lorsque les distances (X) sont égales à des valeurs non incluses dans un intervalle prédéterminé, le bras de support (21) du dispositif porteur (2) est réglé en hauteur par un mécanisme de propulsion (24) afin de maintenir la liaison électroconductrice entre le contact glissant (6) et le fil de la caténaire (102), caractérisé en ce que l'intervalle présente une longueur de 10 cm et la force de rappel est comprise entre 40 N et 100 N et définie en fonction du poids du contact glissant (6) et du support (5) inférieur à 8 kg, en ce que le capteur (3) est formé par deux fibres optiques faisant fonction d'émetteur et de récepteur et le dispositif de contrôle de la distance comporte une règle graduée (8), qui est conçue en forme d'écran prismatique, qui est installé entre l'émetteur et le récepteur, et en ce que le capteur (3) est raccordé par l'intermédiaire d'une ligne de transmission des signaux (10) à une unité d'analyse et de commande (4), dont la sortie émettant des signaux communique avec le mécanisme de propulsion.

2. Dispositif de captage du courant selon la revendication 1, caractérisé en ce que les premières extrémités du bras de support (21), formé d'une ou de deux parties, et du mécanisme de propulsion (24) sont montées chacune par l'intermédiaire d'une articulation (22 et 23) contre une plaque de support (30), qui est fixée de manière inamovible par l'intermédiaire d'isolateurs (41) sur le toit du véhicule (100) actionné par l'électricité.

3. Dispositif de captage du courant selon la revendication 1 ou 2, caractérisé en ce que le mécanisme de propulsion (24) vient en contact avec le bras de support (21) par l'intermédiaire d'une articulation (25) et en ce que le système de ressort (7) est fixé contre la deuxième extrémité du bras de support (21), de telle sorte que son axe longitudinal soit toujours orienté perpendiculairement au fil de la caténaire (102).
